# EUROPEAN PATENT APPLICATION

(11) **EP 3 324 461 A1**
(43) Date of publication of application: **23.05.2018**
(21) Application number: 15898014.4
(22) Date of filing: 15.07.2015
(51) Int. Cl.: H01M 2/16

(54) **SEPARATOR FOR LITHIUM-ION BATTERY, MANUFACTURING METHOD THEREFOR, AND LITHIUM-ION BATTERY**

(71) Applicant: Robert Bosch GmbH, 70442 Stuttgart (DE)
(72) Inventor: LU, Qiang, Shanghai 200335 (CN); WANG, Lei, Shanghai 200335 (CN); ZHANG, Jingjun, Shanghai 200335 (CN)
(86) International application number: PCT/CN2015/084145
(87) International publication number: WO 2017/008286

(57) **Abstract**

Provided is a separator for a lithium ion battery, comprising: in sequence, a porous substrate, a ceramic coating located on one side of the porous substrate, and a gel coating located on the ceramic coating. Further provided are a preparation method for the separator, and a lithium ion battery using the separator.

## Description

### Technical Field

The present invention relates to a separator for a lithium ion battery and a preparation method therefor, and a lithium ion battery using the separator.

### Background Art

A lithium ion battery generally comprises a lithium-containing positive electrode (i.e., a cathode), a negative electrode (i.e., an anode), a separator and an electrolyte. Separator materials are typically porous substrates, such as a microporous membrane and a porous sheet. A key challenge in applying a lithium ion battery to an electric vehicle is the need to ensure safety. In continuous charge/discharge cycles, a lithiation/delithiation process is accompanied by electrode expansion/shrinkage, thereby resulting in a non-uniform stress distribution in a battery cell. These stresses in turn cause the battery cell to deform, with the consequence of the battery short-circuiting and triggering thermal runaway in the absence of any precautions being taken, and the accumulation of heat and the increase in the gas pressure inside the battery may even cause the battery to burn or explode.

The prior art reports coating a separator with various coatings in order to improve the various properties, including safety, of the lithium ion battery. For example, CN 103155219 A discloses coating the separator of a lithium ion battery with a gel coating; and CN 104638220 A discloses coating the separator of a lithium ion battery with a ceramic coating, and there are also some reports regarding the coating of the separator of a lithium ion battery with a gel/ceramic composite monolayer coating.

For a gel coating, a polymer (e.g., polyvinylidene fluoride, abbreviated as PVDF) is dissolved in a mixture of volatile solvents with different boiling points, wherein the solvents with a lower boiling point volatilize faster and the solvents with a higher boiling point first form liquid bubbles in the gel, and after the volatilization of the liquid bubbles, the space once occupied by the liquid bubbles becomes pores in the gel, thereby obtaining a porous polymer. In a hot pressing process for the preparation of a battery, an adhesive porous layer of a separator is bonded to a positive electrode. Subsequently, the shape of the battery is adjusted by means of cold pressing. The use of the gel coating greatly increases the hardness of the battery cell, and therefore when the battery is subjected to charge/discharge cycles, the internal stress can be partially relieved. However, the disadvantages of using the gel coating are as follows: the porous substrate is in direct contact with the positive electrode, and the porous substrate is easily oxidized when the battery is charged to a high voltage, which may reduce the mechanical strength of the separator and present a potential safety risk.

For a ceramic coating, same is generally a suspension of ceramic particles dispersed in water, also referred to as a ceramic slurry. Coating the surface of a separator with a ceramic slurry having a good heat resistance can effectively prevent the separator from shrinking at a high temperature, thereby remarkably improving the safety of the battery cell. However, during charge/discharge cycles, the ceramic coating can neither adapt to the internal tension, nor can same prevent the deformation of the battery cell.

For a gel/ceramic composite monolayer coating, ceramic powder is mixed with a gel to obtain a gel-ceramic slurry, and then the surface of a separator is coated with the gel-ceramic slurry to form a single coating. In principle, the combination of a gel with a ceramic coating in a monolayer coating can have the advantages of both of the two coatings while avoiding the defects thereof. However, this balancing effect is limited. If the amount of the ceramic powder is too small, the positive electrode cannot be effectively separated from the porous substrate. If the amount of the ceramic powder is too large, the porosity of the coating will be reduced and the internal resistance will be dramatically increased.

It can be seen therefrom that coatings for separator surfaces in the prior art still cannot solve all the problems associated with battery safety. Therefore, it is necessary to develop a separator that can not only prevent the deformation of the lithium ion battery during charge/discharge, but also prevent the oxidation and degradation of the porous substrate, so as to improve the safety of the battery on the whole.

### Summary of the Invention

In view of the above-mentioned problems, according to one aspect of the present invention, there is provided a separator for a lithium ion battery, comprising: in sequence,
a porous substrate,
a ceramic coating located on one side of said porous substrate, and
a gel coating located on said ceramic coating.

According to another aspect of the present invention, there is provided a method for preparing the separator as mentioned previously, comprising the following steps:
a) applying a ceramic slurry on one side of the porous substrate, followed by drying; and
b) applying a gel solution on the dried ceramic coating, followed by drying.

Preferably, the ceramic slurry is applied by means of gravure printing coating or dip-coating. Preferably, the gel solution is applied by means of spray coating.

According to another aspect of the present invention, there is provided a lithium ion battery, comprising
a positive electrode, said positive electrode comprising a positive electrode current collector, a positive electrode active material and a positive electrode binder, said positive electrode binder being preferably a polyvinylidene fluoride-based resin;
a negative electrode, said negative electrode comprising a negative electrode current collector, a negative electrode active material and a negative electrode binder;
the separator as mentioned previously, with said separator being located between said positive electrode and said negative electrode, the porous substrate of said separator being close to the negative electrode side, and the gel coating of said separator being immediately adjacent to said positive electrode; and
an electrolyte.

According to another aspect of the present invention, there is provided a method for preparing a lithium ion battery, characterized in that said positive electrode, said negative electrode, said separator, and said electrolyte are placed in a battery case and sealed to thereby obtain a lithium ion battery, and then the sealed lithium ion battery is sequentially subjected to hot pressing and cold pressing operations.

The lithium ion battery according to the present invention can be used in an electric vehicle.

The use of the separator of the present invention can not only prevent the deformation of the lithium ion battery during charge/discharge, but also prevent the oxidation and degradation of the porous substrate, so as to improve the safety and electrochemical properties, including cycle stability, rate performance, high current charge-discharge capability, first efficiency, etc., of the battery on the whole.

With reference to the following accompanying drawings, the various other features, aspects, and advantages of the present invention will become more apparent. These accompanying drawings, which are not drawn to scale, are intended to schematically explain and illustrate various structures and the positional relationships thereof, and should not be construed as being limiting.

### Brief Description of the Drawings

Figure 1 schematically shows a sectional view of the separator of the present invention.
Figure 2 schematically shows a method and apparatus for preparing the separator of the present invention.

### Detailed Description of Embodiments

Unless otherwise defined, all technical and scientific terms used herein have the meaning as commonly understood by a person of ordinary skill in the art to which this invention belongs. If there is an inconsistency, the definition provided in the present application shall prevail.

Unless otherwise indicated, numerical ranges listed herein are intended to include the endpoints of the ranges, and all numerical values within the ranges and all subranges thereof.

Materials, contents, methods, apparatuses, and examples herein are all illustrative, and should not be construed as being limiting, unless specifically indicated.

### [Separator]

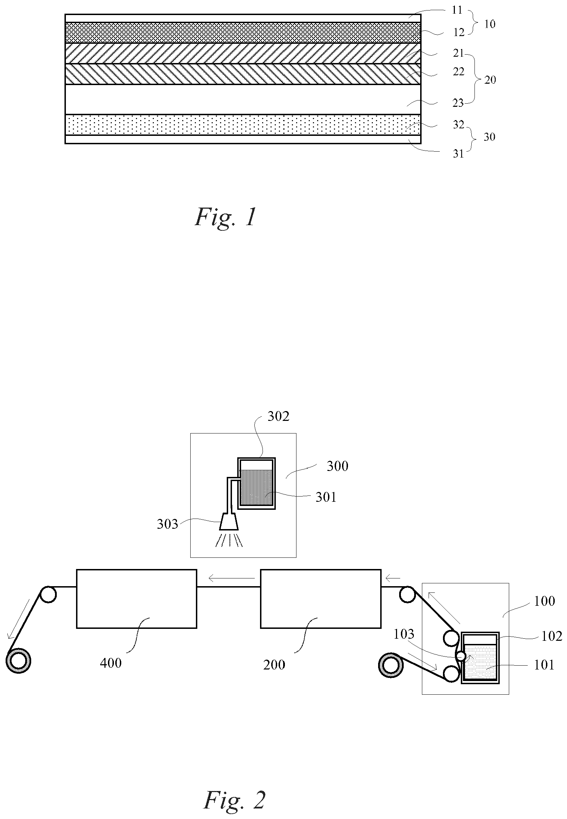

As shown in Fig. 1, a separator 20 for a lithium ion battery according to the present invention comprises: in sequence, a porous substrate 23, a ceramic coating 22 located on one side of the porous substrate 23, and a gel coating 21 located on the ceramic coating.

According to the present invention, the separator coated with a ceramic/gel bilayer, which is obtained by coating the same side of the porous substrate sequentially with a ceramic slurry and a gel solution as two separate layers, can improve the battery in the aspects of:
1) On the positive electrode side, after a hot pressing step as described below, the gel and the positive electrode are bonded to each other, which helps to partially relieve the internal stress, thereby preventing the deformation of the lithium ion battery.
2) The ceramic coating separates the positive electrode from the porous substrate, which prevents the oxidation and degradation of the porous substrate, thereby improving the safety of the battery while improving the cycle stability of the battery. In addition, the ceramic coating can control the harm caused by lithium dendrites to be minimal. In other words, by growing fine lithium dendrites in the pores of the ceramic coating, the following safety problems that may occur when the use of other coatings can be suppressed where a micro-short circuit inevitably occurs: due to the generation of heat by the micro-short circuit, the separator melts, resulting in a large area short circuit, thereby leading to fire and failure of the battery. Moreover, compared with a gel/ceramic composite monolayer coating, the ceramic coating and the gel coating in the separator of the present invention are independent of each other, and thus the separator may have an excellent porosity, whereby significantly more electrolyte can be stored in the pores, greatly improving the rate performance.

For the entire battery, the use of the separator of the present invention may suppress the expansion and deformation of the battery cell, and ensure enhanced electrochemical properties and safety.

### (Porous substrate)

In the separator of the present invention, the porous substrate refers to a substrate having a plurality of pores or voids inside, and a gas or liquid can flow from one side of the substrate to the other side thereof. The porous substrate used in the present invention is not electronically conductive but has an ionic conductivity, solvent resistance, and chemical stability. There is no particular limitation on the porous substrate, and any known porous substrate for battery separators can be used in the present invention.

The porous substrate may be in the form of a microporous membrane, a porous sheet (e.g., fibrous materials such as a nonwoven fabric and a paper-like sheet), or a composite structure thereof.

Non-limiting examples of the microporous membrane may be polyolefin microporous membranes. In the polyolefin microporous membranes, the polyolefin is one or more of polyethylene, polypropylene, polybutene and polyvinyl chloride. These microporous membranes are all commercially available.

Examples of the porous sheet may include polyesters such as polyethylene terephthalate; polyolefins such as polyethylene and polypropylene; fibrous materials such as heat-resistant macromolecules, e.g., aromatic polyamides, polyimides, polyethersulphones, polysulphones, polyetherketones, polyetherimides, or mixtures thereof. These porous sheets are all commercially available.

The polymer microporous membrane or the porous sheet may be a monolayer structure, a bilayer structure, or a multilayer structure. In a porous substrate of two or more layers, the pores of these layers are at least partially in communication, e.g., more than 90% of the pores of two adjacent porous substrates are in communication, so as to ensure the ionic conductivity of the porous substrate.

The thickness of the porous substrate of the present invention is preferably 9-30 µm, preferably 10-22 µm, more preferably 16-20 µm.

### (Ceramic coating)

In the present invention, the ceramic coating is obtained by applying a ceramic slurry on one side of the above-mentioned porous substrate.

A ceramic slurry generally refers to a suspension of ceramic particles dispersed in water, which comprises ceramic particles, a water-soluble binder and water.

The ceramic particles used in the present invention are not particularly limited, and are preferably inorganic ceramic particles which may be selected from titanium dioxide, aluminium oxide, copper oxide (CuO), zinc oxide, silicon dioxide, zirconium oxide, cerium oxide, magnesium oxide, calcium carbonate, zeolites and mixtures thereof. Aluminium oxide is particularly preferred, and more preferably, the aluminium oxide has the properties of a specific surface area of 5 m²/g, a crystal form of α-type crystals and a purity of 99.99%. A commercially available aluminium oxide can be obtained, for example, as AKP-3000 from Sumitomo Chemical Co., Ltd. The ceramic particles may be inorganic nanoparticles, and the particle size thereof may vary within a range of from several tens of nanometres to several hundreds of nanometres, for example, same may vary within a range of 300-500 nm. The shape of the ceramic particles is not particularly limited, and may be, for example, spherical, linear, nanotube-like, hexahedral or sheet-like, but spherical ceramic particles are preferred.

The water-soluble binder used in the present invention is not particularly limited, and may be, for example, a mixture of sodium carboxymethyl cellulose and a styrene-butadiene rubber; a mixture of gelatine and polyvinyl alcohol; or an acrylate (e.g., ethyl acrylate and methyl acrylate) and a polymer or copolymer thereof, etc. A commercially available water-soluble binder can be obtained, for example, from a binder of model BM820B from ZEON, Japan.

Preferably, the solid content is about 30-45 wt%, for example, about 40 wt%, based on the total weight of the ceramic slurry.

The thickness of the ceramic coating of the present invention is 1-5 µm, preferably 2-3 µm. Here, the thickness of the ceramic coating refers to a dry thickness.

Preferably, the ceramic slurry consists of only ceramic particles, a water-soluble binder and water. Of course, the ceramic slurry may also optionally contain additives as needed.

The ceramic particles, the water-soluble binder and water may be mixed by a known method. Preferably, a commercially available ball mill or high shear stirrer is used for stirring.

### (Gel coating)

In the present invention, the gel coating is obtained by applying a gel solution on the ceramic coating.

The gel solution comprises a gel, a main solvent for dissolving the gel, and a co-solvent for pore formation.

The gel used in the present invention is not particularly limited, and is preferably a polyvinylidene fluoride-based resin. As a polyvinylidene fluoride-based resin, a homopolymer of vinylidene fluoride (i.e., polyvinylidene fluoride (PVDF)), a copolymer of vinylidene fluoride and a copolymerizable monomer, or a mixture thereof can be used. As monomers copolymerizable with vinylidene fluoride, one or more of tetrafluoroethylene, hexafluoropropylene, trifluoroethylene, trichlorethylene and vinyl fluoride can be used, for example. Such a polyvinylidene fluoride-based resin can be obtained by emulsion polymerization or suspension polymerization. The polyvinylidene fluoride-based resin used in the present invention is preferably polyvinylidene fluoride, and a copolymer of vinylidene fluoride and hexafluoropropylene (a PVDF-HFP copolymer). The gel is, for example, in the form of powder or particles.

The weight average molecular weight of the polyvinylidene fluoride-based resin used in the present invention is preferably in a range of 100,000-3,000,000, preferably 300,000-2,000,000, more preferably 500,000-1,500,000. When the weight average molecular weight of the polyvinylidene fluoride-based resin is greater than or equal to 100,000, the gel coating has sufficient mechanical properties and adhesiveness. When the weight average molecular weight of the polyvinylidene fluoride-based resin is less than or equal to 3,000,000, the gel coating can form a desired porous structure and has an appropriate viscosity.

The main solvent is used for dissolving the gel. The main solvent is preferably acetone.

The gel solution of the present invention further comprises a co-solvent. The boiling point of the co-solvent is higher than that of the main solvent. In the process of drying the gel coating, the main solvent volatilizes faster; and the co-solvent first forms liquid bubbles in the gel, and after the volatilization of the liquid bubbles, the space once occupied by the bubbles becomes pores in the gel, thereby obtaining a porous polymer. The use of the co-solvent helps to form a good porous structure and can promote the dissolution of the gel. The co-solvent may be selected from a polar amide, a monohydric alcohol and a polyhydric alcohol. The polar amide includes N-methylpyrrolidone (NMP), dimethylacetamide, dimethylformamide, etc. The monohydric alcohol may be, for example, methanol, ethanol, propanol (including n-propanol and isopropanol), or butanol (including n-butanol, isobutanol, sec-butanol and tert-butanol); and the polyhydric alcohol may be, for example, butylene glycol, ethylene glycol, propylene glycol or tripropylene glycol. Preferably, the co-solvent is N-methylpyrrolidone (NMP), isopropanol or n-butanol.

Preferably, the gel solution comprises 0.1-10 wt% of the gel based on the total weight of the gel solution, i.e., the solid content is 0.1-10 wt%, preferably 2-8 wt%.

Preferably, in the gel solution, the ratio of the main solvent to the co-solvent is 85-95 wt% : 5-15 wt%.

Preferably, the gel solution consists of only a gel, a main solvent for dissolving the gel, and a co-solvent for pore formation. Of course, the gel solution may also optionally contain additives as needed.

Preferably, the gel solution does not contain water.

The gel, the main solvent and the co-solvent can be mixed in any appropriate order by any suitable method. The mixing may be carried out continuously or intermittently. As needed, stirring may be carried out during mixing. The stirring speed may be set to be the same or different in different stages of the mixing. For example, acetone may be first added to a gel preparation tank with a heating jacket and nitrogen protection, warmed up to about 40°C and maintained at this temperature. Then, the gel is slowly added to the gel preparation tank under stirring within about 20 minutes, and stirring is continued for about 2 hours. Then, isopropanol is added to the gel preparation tank under stirring, and stirring is continued for about 1.5 hours, thereby obtaining a clear and transparent gel solution. The stirrer may be an electric stirrer. The gel preparation tank is preferably equipped with a pressure relief device and an acetone concentration monitoring device, so as to prevent an excessively high concentration of acetone resulting in a large amount of acetone vapour being present in the gel preparation tank, which in turn causes an explosion.

The thickness of the gel coating of the present invention is 1-5 µm, preferably 2-3 µm. Here, the thickness of the gel coating refers to a dry thickness.

### [Method for preparing the separator]

Preferably, a ceramic solution is applied on the porous substrate by means of gravure printing coating or dip-coating, and both coating methods can ensure a sufficiently high density of the ceramic coating so as to improve the safety of the battery.

After the ceramic coating is dried, the gel solution is preferably applied by means of spray coating. The spray coating can not only ensure a high porosity, but also prevents possible damage to the ceramic coating during coating by means of a contact coating method.

As shown in Fig. 2, the porous substrate is placed on a conveyor belt which is driven by a plurality of rollers to move in a direction indicated by the arrow.

Firstly, a ceramic slurry 101 is applied on one side of the porous substrate using a ceramic coating unit 100. The ceramic coating unit 100 shown in Fig. 2 is a gravure printing coating apparatus which comprises a container 102 that contains the ceramic slurry 101 and a roll ball-shaped handpiece 103 that is embedded in the container 102. The handpiece 103 is in contact with the porous substrate. In the figure, the rolled porous substrate shown by a grey ring on the right side of Fig. 2 is unwound and moves along with the conveyor belt in the direction indicated by the arrow, and the finally obtained separator product coated with the ceramic coating and the gel coating is further wound into a roll (see Fig. 2, the left side, the grey ring). At the contact point between the handpiece 103 and the porous substrate, the direction of rotation of the handpiece 103 (e.g., the counter-clockwise direction shown in Fig. 2) is opposite to the direction of movement of the conveyor belt. With the rotation of the handpiece 103, the ceramic slurry 101 flows out of the junction of the handpiece 103 and the container 102 and is coated onto the porous substrate that moves along with the conveyor belt. Then, the porous substrate coated with the ceramic slurry enters an oven 200 for drying, thereby evaporating water and optionally existing solvents. The coating speed is, for example, 10-50 m/min, and the drying temperature is, for example, 30-60°C.

Then, a gel solution 301 is applied on the dried ceramic coating using a gel coating unit 300. The gel coating unit 300 shown in Fig. 2 is a spray coating apparatus which comprises a container 302 that contains the gel solution 301, and a spray nozzle 303 that is in communication with the container 302.

Then, the porous substrate coated with ceramic particles and the gel solution enters an oven 400 for drying, thereby evaporating the solvent, so as to obtain the separator of the present invention. The coating speed is, for example, 10-50 m/min, and the drying temperature is, for example, 30-60°C.

The oven 400 and the oven 200 may be the same or different. The main structure (not shown in the figure) of the oven 400 and the oven 200 comprises a support roller that conveys the separator, and air supply ports that are respectively arranged above and below the support roller. The air entering each of the air supply ports is heated by a heating device (such as a heating bag) located outside of the ovens, so that the air blown out from the air supply port is a hot air having a temperature of 30-60°C, whereby the water or solvent in the coating can be dried to a desired degree without sacrificing the quality of the separator. In order to achieve an ideal battery performance, in the final separator product, the ceramic coating does not contain water, and the gel coating does not contain any solvents (i.e., neither the main solvent nor the co-solvent).

Here, if the temperature, i.e., drying temperature, of the air blown out from the air supply port is equal to or higher than 30°C, the drying can be carried out more thoroughly; if the temperature is equal to or lower than 60°C, the porous substrate will not be damaged due to pores closing.

In the entire coating apparatus (comprising a gravure printing coating apparatus and a spray coating machine), a tension applied to the porous substrate between the headpiece and the tail is 3-10 N.

### [Lithium ion battery]

As shown in Fig. 1, the lithium ion battery comprises
a positive electrode 10, said positive electrode 10 comprising a positive electrode current collector 11, a positive electrode active material 12 and a positive electrode binder (not shown in the figure), wherein the positive electrode binder is preferably a polyvinylidene fluoride-based resin;
a negative electrode 30, said negative electrode 30 comprising a negative electrode current collector 31, a negative electrode active material 32 and a negative electrode binder (not shown in the figure);
a separator 20, said separator 20 comprising a porous substrate 23, a ceramic coating 22 and a gel coating 21, wherein said separator 20 is located between said positive electrode 10 and said negative electrode 20, said porous substrate 23 is close to the negative electrode side, and said gel coating 21 is immediately adjacent to said positive electrode 10; and
an electrolyte (not shown in the figure).

An aluminium foil with a thickness of 5-30 µm may be, for example, used as the positive electrode current collector.

All positive electrode active materials commonly used for a lithium ion battery can be used as the positive electrode active material of the present invention, which is a compound capable of reversibly intercalating and deintercalating Li⁺, for example, lithium cobalt oxide, lithium nickel oxide, lithium manganese oxide, lithium iron phosphate or lithium nickel cobalt manganese oxide (NCM), with lithium nickel cobalt manganese oxide being preferred.

The positive electrode further comprises a polyvinylidene fluoride-based resin as a positive electrode binder. The selection range for the vinylidene fluoride-based resin binder is the same as that defined previously for the gel. The positive electrode binder and the gel in the separator may be the same material or different materials. Preferably, the positive electrode binder and the gel in the separator are the same material. For example, they are both polyvinylidene fluoride. In the subsequent hot pressing operation, the positive electrode and the gel are bonded to each other, thereby preventing the deformation of the lithium ion battery.

All negative electrode active materials commonly used for a lithium ion battery can be used as the negative electrode active material of the present invention, which is a material capable of electrochemically intercalating and deintercalating lithium, for example, silicon, a silicon alloy, a silicon oxide, and carbon. The silicon may be, for example, nano-silicon. Various forms of carbon, such as natural graphite, artificial graphite, soft carbon and hard carbon, can all be used in the present invention.

A copper or nickel foil with a thickness of 5-30 µm may be, for example, used as the negative electrode current collector.

The negative electrode further comprises a negative electrode binder. Substances commonly used for the negative electrode binder of a lithium ion battery can all be used in the present invention, including, but not limited to, the polyvinylidene fluoride-based resin as described above, a butene-styrene resin, etc. When the polyvinylidene fluoride-based resin is used as the negative electrode binder, the negative electrode binder, the positive electrode binder and the gel in the separator may be the same or may be different from each other.

As mentioned previously, a lithium salt dissolved in an appropriate organic solvent can be used as the electrolyte. Examples of the lithium salt include lithium bis(oxalate)borate (LiBOB), LiPF₆, LiBF₄ and LiClO₄. For the organic solvent, preference can be given to using cyclic carbonates, such as ethylene carbonate, propylene carbonate, fluoroethylene carbonate and difluoroethylene carbonate; chain carbonates, such as dimethyl carbonate, diethyl carbonate, ethyl methyl carbonate and fluoro-substituted forms thereof; and cyclic lactones, such as γ-butyrolactone and γ-valerolactone, or mixed solvents thereof.

In addition, the lithium-ion battery electrolyte of the present invention may further optionally comprise other additives. All additives commonly used for a lithium-ion battery can be used in the present invention as long as they do not adversely affect the overall performance of the battery. Additives useful for the present invention include, but are not limited to, film forming additives, flame retardants, conductive additives, etc.

Film forming additives include, for example, ethylene sulphite (ES), 1,3-propane sultone (PS), vinylene carbonate (VC), vinylethylene carbonate (VEC), fluoroethylene carbonate (FEC), and vinyl sulphate (DTD).

Flame retardants include phosphates, especially alkyl phosphates, such as trimethylphosphate (TMP) and triethylphosphate (TEP); fluoroalkylphosphates, such as tris(2,2,2-trifluoroethyl)phosphate (TFP) and tris(2,2,2-trifluoroethyl)methyl phosphate (BMP); and phosphazenes (e.g., hexamethylphosphazene).

Conductive additives include, for example, amines (e.g., acetamide, paradiazine and metadiazine) and crown ethers (e.g., 12-crown-4, 18-crown-6).

### [Method for preparing a lithium ion battery]

A slurry of a positive electrode active material is applied on a positive electrode current collector, dried and pressurized to prepare a positive electrode. Similarly, a slurry of a negative electrode active material is applied on a negative electrode current collector, dried and pressurized to prepare a negative electrode. Then, a separator is placed between the positive and negative electrodes and mounted in a battery case. An electrolyte is injected into the battery case, and the battery assembly thus obtained is encapsulated using a vacuum sealer.

After the encapsulation of the battery, hot pressing is applied to promote the adhesion between the gel coating and the positive electrode.

Immediately after the completion of the hot pressing step, cold pressing is applied to fix the shape of the battery, thereby relieving the internal tension of the battery. Parameters related to the hot pressing-cold pressing steps are listed in the following table.

| Parameter | Value |
|---|---|
| Hot pressing pressure (kgf) | Battery cell width × battery cell height × 18.5 kgf/cm² × the number of battery cells |
| Hot pressing time (min) | 3-5 (varying with the type of the battery cell) |
| Hot pressing temperature (°C) | 50-60 (varying with the type of the electrolyte) |
| Cold pressing pressure (kgf) | Battery cell width × battery cell height × 14 kgf/cm² × the number of battery cells |
| Cold pressing time (min) | 2-4 (varying with the type of the battery cell) |
| Cold pressing temperature (°C) | 25 ± 5 |

The main components and structures of the separator and the lithium ion battery of the present invention can be detected by means of chemical and microstructural analyses, e.g., determined by means of Fourier transform infrared spectroscopy (FTIR) and scanning electron microscopy (SEM).

## Claims

1. Separator for a lithium ion battery, comprising: in sequence,
a porous substrate,
a ceramic coating located on one side of said porous substrate, and
a gel coating located on said ceramic coating.

2. Separator according to Claim 1, **characterized in that** said ceramic coating comprises ceramic particles and a water-soluble binder; and said gel coating comprises a gel, which is preferably a polyvinylidene fluoride-based resin.

3. Separator according to Claim 1 or 2, **characterized in that** the thickness of said porous substrate is 9-30 µm, preferably 10-22 µm, and more preferably 16-20 µm; the thickness of said ceramic coating is 1-5 µm, preferably 2-3 µm; and the thickness of said gel coating is 1-5 µm, preferably 2-3 µm.

4. Method for preparing the separator according to any one of Claims 1-3, comprising the following steps:
a) applying a ceramic slurry on one side of the porous substrate, followed by drying; and
b) applying a gel solution on the dried ceramic coating, followed by drying.

5. Method according to Claim 4, **characterized in that** said ceramic slurry is applied by means of gravure printing coating or dip-coating, and/or said gel solution is applied by means of spray coating.

6. Method according to Claim 4 or 5, **characterized in that** said ceramic slurry comprises ceramic particles, a water-soluble binder and water.

7. Method according to any one of Claims 4-6, **characterized in that** said gel solution comprises a gel, a main solvent for dissolving the gel, and a co-solvent for pore formation.

8. Method according to Claim 7, **characterized in that** said gel is a polyvinylidene fluoride-based resin, said main solvent is acetone, and said co-solvent is selected from a polar amide, a monohydric alcohol and a polyhydric alcohol.

9. Method according to any one of Claims 4-8, **characterized in that** the thickness of said porous substrate is 9-30 µm, preferably 10-22 µm, and more preferably 16-20 µm; the thickness of said ceramic coating is 1-5 µm, preferably 2-3 µm; and the thickness of said gel coating is 1-5 µm, preferably 2-3 µm.

10. Lithium ion battery, comprising
a positive electrode, said positive electrode comprising a positive electrode current collector, a positive electrode active material and a positive electrode binder, said positive electrode binder being preferably a polyvinylidene fluoride-based resin;
a negative electrode, said negative electrode comprising a negative electrode current collector, a negative electrode active material and a negative electrode binder;
the separator according to any one of Claims 1-3, with said separator being located between said positive electrode and said negative electrode, the porous substrate of said separator being close to the negative electrode side, and the gel coating of said separator being immediately adjacent to said positive electrode; and
an electrolyte.
